(19) **Europäisches Patentamt / European Patent Office / Office européen des brevets**

(11) **EP 2 744 162 B1**

(12) **EUROPEAN PATENT SPECIFICATION**

(45) Date of publication and mention
of the grant of the patent:
**03.06.2015 Bulletin 2015/23**

(51) Int Cl.:
***H04L 27/26*** *(2006.01)*

(21) Application number: **12306585.6**

(22) Date of filing: **14.12.2012**

(54) **Estimation of the CFO based on channel impulse response for OFDM synchronization**

Schätzung des Trägerfrequenzversatzes auf Grundlage einer Kanalimpulsantwort für OFDM-Synchronisierung

Estimation de CFO sur la base de la réponse impulsionnelle du canal pour une synchronisation OFDM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.06.2014 Bulletin 2014/25**

(73) Proprietor: **ST-Ericsson SA**
**1228 Plan-les-Ouates (CH)**

(72) Inventor: **Dhayni, Achraf**
**06220 VALLAURIS (FR)**

(74) Representative: **Hirsch & Associés**
**137, rue de l'Université**
**75007 Paris (FR)**

(56) References cited:
**US-A1- 2004 120 410**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to the field of multicarrier communications systems and more particularly to Orthogonal Frequency-Division Multiplexing (OFDM) systems, including wireless OFDM systems.

BACKGROUND OF THE INVENTION

Orthogonal Frequency-Division Multiplexing (OFDM), also referred to as "multicarrier modulation" (MCM) or "discrete multi-tone modulation" (DMTM), splits up and encodes high-speed incoming serial data, modulating it over a plurality of different carrier frequencies (called "subcarriers") within a communication channel to transmit the data from one user to another. The serial information is broken up into a plurality of sub-signals that are transmitted simultaneously over the subcarriers in parallel.

By spacing the subcarrier frequencies at intervals of the frequency of the symbols to transmit, the peak power of each modulated subcarrier lines up exactly with zero power components of the other modulated subcarriers, thereby providing orthogonality (independence and separability) of the individual subcarriers. This allows a good spectral efficiency (close to optimal) and minimal inter-channel interference (ICI), i.e. interferences between the subcarriers.

For these reasons, OFDM is used in many applications. Many digital transmission systems have adopted OFDM as the modulation technique such as digital broadcasting terrestrial TV (DVB-T), digital audio broadcasting (DAB), terrestrial integrated services digital broadcasting (ISDB-T), digital subscriber line (xDSL), WLAN systems, e.g. based on the IEEE 802.11 a/g standards, cable TV systems, etc.

However, the advantage of the OFDM can be useful only when the orthogonality is maintained. In case the orthogonality is not sufficiently warranted by any means, the performances of the OFDM system may be degraded due to intersymbol interference (ISI) and inter-carrier interference (ICI).

This could happen as a result of synchronization issues between the clocks of the emitter and of the receiver of the OFDM system. These issues comprise:

- Symbol Timing Offset (STO) and,
- Carrier Frequency Offset (CFO).

Carrier Frequency Offset is notably caused by the mismatch of the oscillators of the emitter and of the receiver of the OFDM system, the nonlinear characteristic of the wireless channel and the Doppler shift when the emitter and/or the receiver are moving.

Even small frequency offsets can dramatically harm the signal to noise ratio (SNR) and the bit-error rate (BER). In particular, OFDM systems employing time-domain differential demodulation are very sensitive to CFO.

Therefore, accurate CFO estimation and correction algorithms should be implemented so as to avoid performance degradation.

Several solutions have been proposed so far.

Several of these solutions are based on a split of the CFO between a Fractional Carrier Frequency Offset (FFO) and an Integer Carrier Frequency Offset (IFO). Each of these two parts can be addressed separately.

However, the proposed solutions are not entirely satisfactory and efficient. These solutions have one or several of the following drawbacks:

- Some techniques decrease the spectral efficiency by using dedicated transmitted data or sample sequences to train the CFO estimator at receiver's side. It is the case of many solutions based on pilot signals as for instance described in "Frequency Synchronization Algorithms for OFDM systems suitable for Communication over Frequency Selective Fading Channels" of Ferdinand Classen and Heinrich Meyr, In Proceedings of the Vehicular Technology Conference (VTC'97).
- Some techniques are not accurate enough.
- Some techniques require complex implementation.
- Some technique implies analog treatment, leading to important silicon overhead.
- Some techniques are not fully compliant with OFDM standards (like WLAN, LTE...)

The document US2004/120410 discloses post FFT fractional frequency offset estimation in an OFDM receiver Pilots are spaced at regular frequency intervals with unused subcarriers in between. The frequency offset is directly proportional to the measured phase of the pilot subcarriers. This frequency offset estimation is then fed to the FFT to compensate the frequency offset.

There is thus a need for a solution permitting to improve the situation by providing a better estimation of the CFO and more particularly of the Integer Carrier Frequency Offset (IFO) part..

SUMMARY OF THE INVENTION

The invention is as defined in the independent claims.

BRIEF DESCRIPTION OF THE DRAWINGS

FIG. 1 illustrates a simplified and high-level block diagram of an OFDM system.
FIG. 2 illustrates a possible block diagram of the carrier frequency offset estimator in accordance with an embodiment of the invention.
FIG. 3 illustrates a possible block diagram of the carrier frequency offset estimator in accordance with another embodiment of the invention.
FIGS. 4a and 4b illustrate a simplified example of transmitted OFDM spectrum.

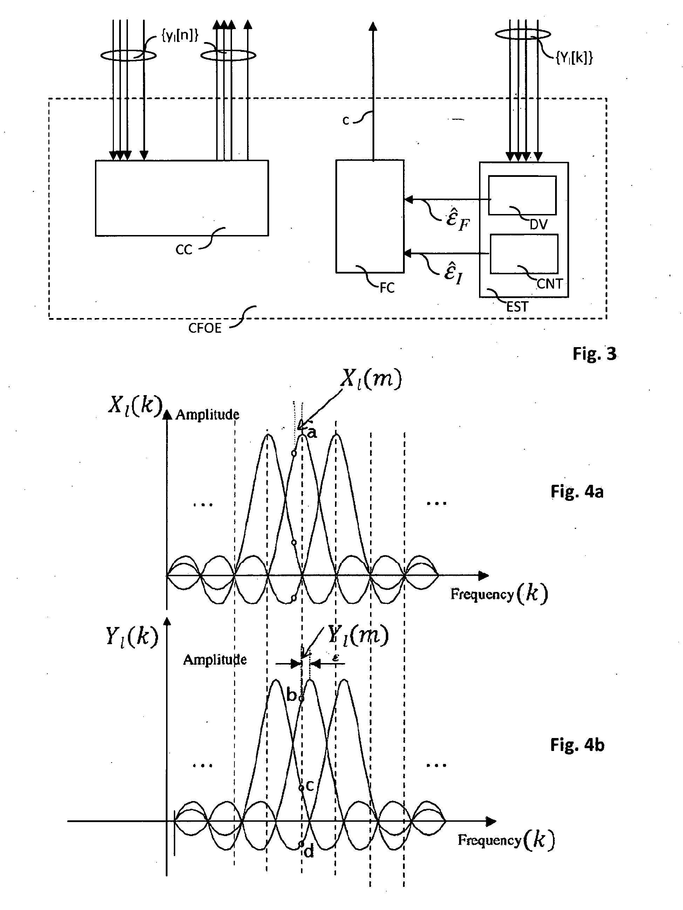

FIG. 4 is a detailed view of the mixing circuitry according to an embodiment of the invention.

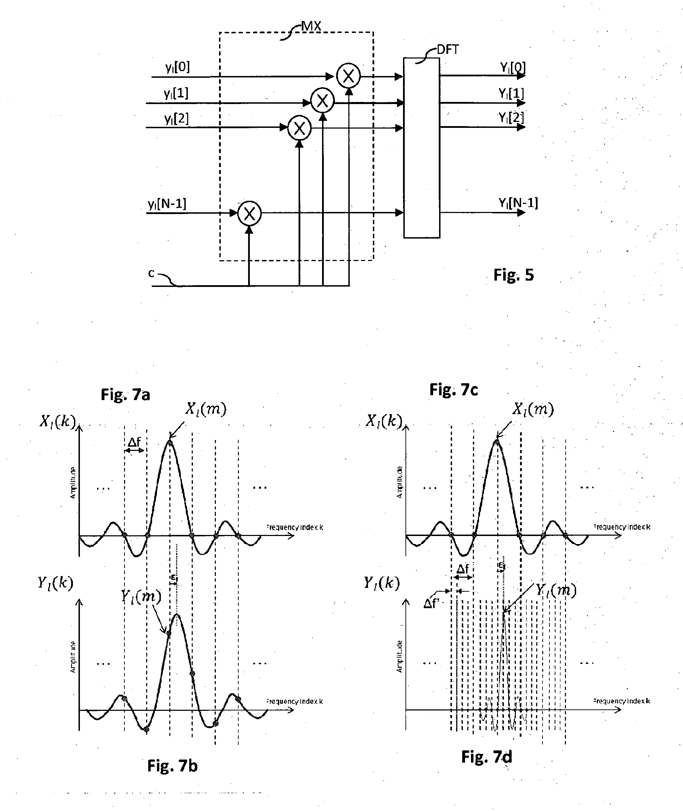

FIG. 5 is a more detailed view of a mixing circuit according to an embodiment of the invention.

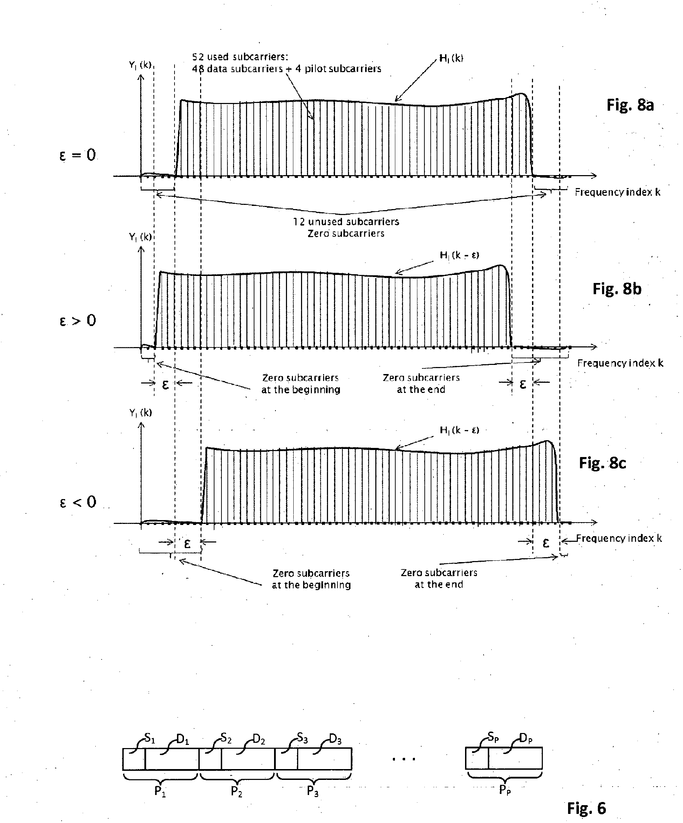

FIG. 6 illustrates an OFDM signal made of several packets according to an embodiment of the invention.
FIGS. 7a, 7b, 7c, 7d illustrate a simplified example of transmitted OFDM spectrum according to embodiments of the invention.
FIGS. 8a, 8b and 8c illustrate three different outputs of the time-to-frequency conversion module during the transmission of synchronization signal according to an embodiment of the invention.

DETAILED DESCRIPTION OF EMBODIMENTS OF THE INVENTION

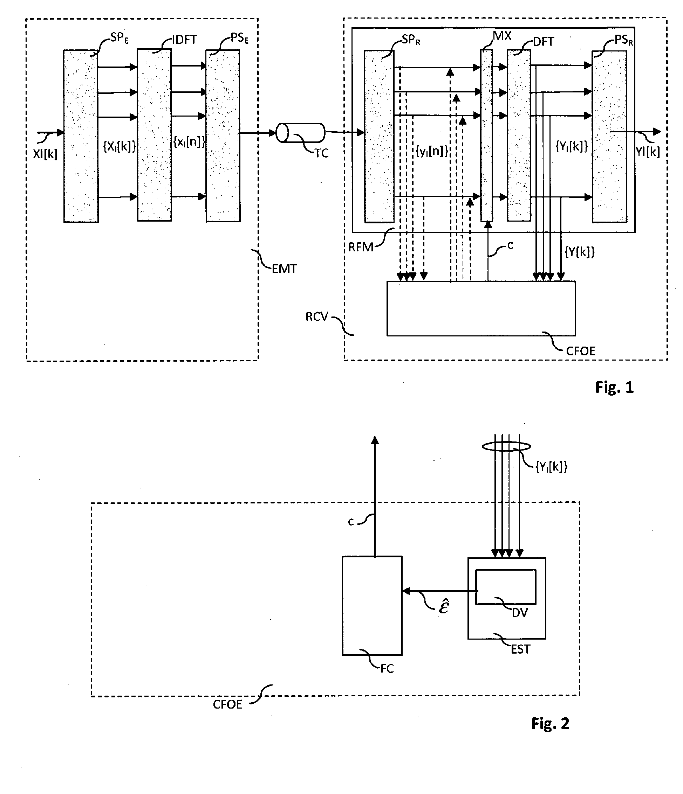

FIG. 1 illustrates a simplified and high-level block diagram of an OFDM system comprising an emitter EMT and a receiver RCV connected by a communication channel TC. This communication channel is usually (but not necessarily) wireless and perturbed by noise.

The principle of this OFDM system consists in transmitting several symbols (or signal) in parallel by assigning to each of them a different carrier, each carrier being orthogonal to the others. The number of carriers (or subcarriers) depends on the total bandwidth and on the duration of a symbol (i.e. the size of the time window in which the receiver can capture the transmitted symbols).

The symbols to be transmitted, initially in the frequency domain, are transposed into the time domain and modulated for transmission over the communication channel TC. The receiver RCV transposes the received signals back to the frequency domain to extract the transmitted symbols.

More precisely, the symbols $X_1[k]$ to be transmitted at emitter EMT side are first appropriately encoded and then sent to a serial-to-parallel transformer $SP_E$. This function blocks aims in extracting from a symbol, a number N of individual values $X_1[k]$, where "k" ranges from 1 to N-1 and "1" represents the ordinal number of the OFDM symbol to be transmitted.

This number N is equal to the number of subcarriers used for the transmission over the communication channel TC. It depends on the standard. For instance according to WLAN 802.11a (on which relies the embodiment depicted on figure 5a), 52 subcarriers are used (48 data subcarriers + 4 pilot subcarriers), and 12 (6 on the "left" and 6 on the "right") subcarriers are not used (zero subcarriers).

Here and in the following descriptions, the variable k will be used for the frequency domain and the variable n for time domain.

In the figure 1, the curly brackets indicate a set of individual symbols associated with arrows. They are used to prevent having references for each arrow and helps simplifying and clarifying the figure 1.

The symbols $\{X_l[k]\}$ which are outputted by the serial-to-parallel transformer $SP_E$ are provided to a frequency-to-time conversion module IDFT. This frequency-to-time convertor can perform an inverse discrete Fourier Transform of the symbols $\{X_l[k]\}$ to generate symbols $\{x_l[n]\}$ in the time domain. These symbols $\{x_l[n]\}$ are then multiplexed by the parallel-to-serial transformer $PS_E$ to produce a signal transmitted over the transmitted channel TC.

$h_l(n)$ represents the time domain transfer function associated with the communication channel. This time domain transfer function $h_l(n)$ (called channel impulse response as well) may vary over time (from one OFDM symbol to another) and is therefore indexed by the number 1 of the transmitted symbol. The time domain transfer function $h_l(n)$ represents a multipath channel model and is therefore indexed by the number n, n represents the time delay of each of the considered paths of the multipath model.

The multiplexer $PS_E$ modulates the orthogonal subcarriers by the symbols to be transmitted.

The transmitted OFDM symbol $x_l(n)$ signal spectrum is the sum in the frequency domain of the orthogonal subcarrier sinc functions that are superposed over each other. The individual symbols can be independently modulated by using different types of modulations techniques, like for instance QAM (Quadrature Amplitude Modulation) or PSK (Phase-Shift Keying).

FIG. 4a and 3b illustrate a simplified example of such a transmitted OFDM spectrum at the emitter's side (FIG. 4a) and at receiver's side (FIG. 4b) according to the prior art. These explanations aim at better understanding the problem solved by the invention.

In this simplified example, only 3 subcarriers are depicted in order to keep the figure easy to read. Each subcarrier corresponds to a sinc function which peak matches with a frequency bin associated with an orthogonal modulation frequency. The frequency bins are depicted with vertical dotted lines. The sinc function is defined as sinc(x)=sin($\pi$.x)/ $\pi$.x (in its normalized format).

Taking the example of WLAN 802.11 a/g, the frequency bins are located at -26*312.5 kHz, -25*312.5 kHz..., 25*312.5 kHz, 26*312.5 kHz. (the 0*312.5kHz, subcarrier is not used)

In the figure 4a, the symbol $X_1(m)$ corresponds to a value "a" which is at the peak of the corresponding subcarriers and thus independent of the other subcarriers.

In the figure 4b, the subcarriers are shifted by a carrier frequency offset (CFO) $\varepsilon$ in the frequency domain. As a consequence, the peaks of the sinc functions do not match anymore the frequency bins. The received symbol $Y_1(m)$ is not equal to "a" anymore. Instead, the received signal is the addition of the values of the subcarriers, so as $Y_1(m)$=b+c+d. In other words, the received signal depends on the other subcarriers (c, d). The orthogonality of the subcarriers is violated, due to the presence of the carrier frequency offset $\varepsilon$; and the received and decoded symbols are in error. This is in fact mainly due to the Fractional Carrier Frequency Offset (FFO).

In conclusion, the two parts of the Carrier frequency offset (CFO) have distinct main impacts:

- The Integer Carrier Frequency Offset (IFO) $\varepsilon_I$ shifts the received OFDM signal in the frequency domain.
- The Fractional Carrier Frequency Offset (FFO) $\varepsilon_F$ impacts dramatically the orthogonality of the received OFDM signal and jeopardizes its decoding.

According to the invention, a CFO compensation is put in place, both for the IFO and for the FFO, so as to determine the right values of the received symbols.

The symbols $y_l(n)$ are received by the receiver RCV with, potentially such a CFO. The CFO can be positive or negative. No information can be determined by the receiver RCV about the nature of the transmission channel to help valuing the CFO. In other words, at the moment of CFO estimation, we do not have information about the transfer function of the channel. Therefore, the receiver RCV should rely on blind determination techniques to compensate the effects of the Carrier Frequency Offset.

The received symbols can be expressed with the typical following equation:

$$y_l[n] = \frac{1}{N} \sum_{k=0}^{N-1} H_l[k] X_l[k] e^{j2\pi(k+\varepsilon)\left(\frac{n}{N}\right)} + z_l[n]$$

Where:

- n, k represent variable over the time and frequency domains respectively.
- $H_1$ is the channel transfer function during the $1^{th}$ symbol.
- N is the number of subcarriers (which depends on the standard that is used).
- $z_l$ is the time domain additive noise of the channel during the transmission of the $1^{th}$ symbol.
  k+$\varepsilon$ corresponds to the frequency shifted by the carrier frequency offset $\varepsilon$.

The estimation of the CFO is not a straightforward process.

Its impact on the received signal can be expressed by taking the DFT (Discrete Frequency Transform) of the previous equation. We then get:

$$Y_l[k] = \frac{\sin(\pi\varepsilon_F)}{N \cdot \sin(\pi\varepsilon_F / N)} \cdot e^{j2\pi\varepsilon_F\left(\frac{N-1}{N}\right)} \cdot H_l[k] \cdot X_l[k] + L_l(k) + Z_l[k]$$

Where

$$L_l[k] = e^{j2\pi\varepsilon_F \left(N - \frac{1}{2}/N\right)} \cdot \sum_{m=0, m\neq k}^{N-1} \frac{\sin(\pi(m - k + \varepsilon_F))}{N \cdot \sin(\pi(m - k + \varepsilon_F)/N)} \cdot H_l[m] X_l[m] \cdot e^{j2\pi(m-k)\left(N - \frac{1}{2}/N\right)}$$

This $L_1(k)$ term expresses the distortion due to the inter-channel interference (ICI) from other subcarriers into the $k^{th}$ subcarrier frequency component. As already said, the presence of such a term implies that the orthogonality among subcarrier frequency components is not maintained any longer.

It appears from these two equations that it is in practice impossible to determine directly the FFO

The receiver RCV comprises a receiving function module RFM which generates demodulated symbols Yl[k] from the received symbols stream yl[n]. The demodulated symbols can then be passed over to other circuitry of the receiver RCV (not depicted).

The receiving function module RFM may perform different steps which are usual in OFDM systems but may be subject to variations and different implementations.

The high-level schema of the figure 1 shows a possible implementation where the receiving function module RFM comprises:

- a serial-to-parallel transformer or demultiplexer $SP_R$, which parallelizes the received symbol to a set of time symbols $\{y_l(n)\}$.
- A time-to-frequency conversion module DFT. This convertor can perform a discrete Fourier Transform of the time symbols $\{y_l(n)\}$ to generate a set of received frequency bins $\{Y_l(k)\}$ in the frequency domain, corresponding to determined subcarriers.
- A parallel-to-serial transformer $PS_R$ to produce symbols $Y_1(k)$ made of these received frequency bins $\{Y_l(k)\}$. These symbols can then be transmitted to other circuitries of the receiver RCV (not depicted in the figure).

In order to perform these steps, the receiving function module RFM shares with the emitter EMT the same subcarriers frequencies, as well as the number of subcarriers N. They could have been communicated beforehand, or they may be set or tuned previously in both the emitter and receiver, for instance according to standards specifications.

The time-to-frequency conversion module DFT uses as inputs a frequency correction signal c in order to correct the effect of the CFO within the transmission channel TC. This frequency correction signal c is provided by a carrier frequency offset estimator CFOE, which will be described later.

This frequency correction signal c can be a sine wave signal at a frequency equal to an estimated frequency of the carrier frequency offset (CFO). Several embodiments are possible.

For instance, the frequency correction signal c can be mixed with the time symbol yl[0], yl[1], yl[2]... yl[N-1] before entering the time-to-frequency conversion module DFT, within a mixing circuitry MX.

Such an implementation is close to the one described in the chapter 5 of the book "MIMO-OFDM Wireles Communications with Matlab", of Yong Soo Cho, Jaekwon Kim, Won Young Yang, Chung-Gu Kang, in connection with the figure 5.16.

FIG. 5 shows the mixing circuitry MX with more details. We can see that each individual time symbol $y_l[m]$ is mixed with the frequency correction signal c in the time domain.

Other embodiments are possible. According to some embodiments, the frequency correction signal c can be provided to the time-to-frequency conversion module DFT, so as to avoid mixing signals in the time domain.

Further, the receiving function module RFM can comprise other apparatuses and circuitries to enhance the OFDM demodulation and decoding schemes, and the embodiment depicted in figure 1 may be regarded as an over simplification. Nonetheless, it is sufficient to the man skilled-in-art to situation the invention and how it interacts with the known OFDM systems and processes.

The receiver RCV receives from the emitter EMT an OFDM signal which can be composed of two parts:

- The preamble: to be used by the receiver for frame detection, time and frequency synchronization, automatic gain control, channel estimation, etc. Embodiments of the invention focus in the frequency synchronization part (synchronization signal) of the preamble.
- A data signal, which should be here understood as the part of the OFDM signal that is not the synchronization signal. It can comprise "real" data (i.e. payload, transporting higher-level datagrams), but also pilot data, CRC (cyclic redundancy check) codes, etc.

In general, the OFDM is divided in packets. Each packet is made of a plurality of OFDM symbols. The size of the packets (i.e. the number of symbols) is dependent of the standard.

FIG. 6 illustrates an OFDM signal made of P packets, $P_1$, $P_2$, $P_3$...$P_P$.

The synchronization signal is repeated at the beginning of the packets. In other words, the packets $P_1$, $P_2$, $P_3$...$P_P$ comprise synchronization signal part $S_1$, $S_2$, $S_3$...$S_P$ and a data part $D_1$, $D_2$, $D_3$...$D_P$.

According to an aspect of the invention, the synchronization data is constituted by at least a synchronization symbol corresponding to a single subcarrier. In other words, in the frequency domain before the frequency-to-time conversion module IDFT, we have:

$$X_l(k)=S_1 \text{ for } k=m$$

$X_l(k)=0 \text{ for } k{\neq}m$ where $s_l$ is an amplitude value. This value can be arbitrary chosen. However an important amplitude is interesting as it allows a better discrimination between the peak and the zeros of the received single subcarrier. According to the modulation scheme, it can be equal to a complex value that has maximum amplitude on the constellation diagram.

As it will be explained later, using a single subcarrier implies that even in the presence of a fractional carrier frequency offset, no inter-channel interference (ICI) is created since there is only one channel that is used.

FIG. 7a depicts the OFDM spectrum corresponding to this synchronization symbol is constituted by a single subcarrier at a frequency m. This subcarrier corresponds to a sinc function which peak matches with a frequency bin with this modulation frequency m. The frequency bins are depicted with vertical dotted lines. The sinc function is defined as sinc(x)=sin($\pi$.x)/$\pi$.x (in its normalized format) as it was explained with regard to figures 4a and 4b.

This synchronization signal is generated and then transmitted over the transmission channel TC during a period of time T. This period of time may be around 10 times the normal transmission duration of a data symbol. The longer the period of time is, the better the estimation of the CFO can be. However mitigation shall be done between the needed precision of the CFO and the loss of bandwidth (or spectral efficiency) due to this additional transmission.

The value of the frequency m can be chosen in various ways. It seems however interesting to choose it in the middle of the range of available frequencies, so as to cover positive and negative values of the CFO in equivalent manner. In the context of a WLAN 802.11a/g implementation, m=32 is an interesting value.

The synchronization signal is received by the receiving function module RFM of the receiver RCV

As explained earlier, in addition to the receiving function module RFM, the receiver RCV further comprises a CFO estimator CFOE.

FIG. 2 depicts a possible embodiment of such a CFO estimator.

It comprises an estimation module EST and a frequency correction module FC.

The estimation module EST is in charge of determining an estimated carrier frequency offset $\hat{\varepsilon}$. The frequency correction module takes this estimated carrier frequency offset $\hat{\varepsilon}$ as input and output a frequency correction signal c which is provided to the mixing circuit MX or to the time-to-frequency conversion module DFT, as it was explained earlier.

The estimation module EST takes as inputs the outputs of the time-to-frequency conversion module DFT $\{Y_l(1)\}$.

In a normal situation, the received signal spectrum would resemble the one depicted on figure 7b. However, the synchronization signal is transmitted during a longer duration T and the received signal spectrum looks more like the one depicted in figure 7d. Figure 7c is a copy of the figure 7a for the purpose of better understanding by showing alignments between sent and received signal spectrums.

Figure 7b shows that a straightforward approach for determining the CFO is not possible in presence of a fractional carrier frequency offset (FFO). Due to this fractional part $\varepsilon_F$, the peak value of the received single subcarrier falls between two frequency indices (or bins). Therefore it can be easily detected and, a fortiori, determined.

However, as the transmitted synchronization signal is $T/T_i$ longer than the normal transmission time $T_i$ of an OFDM symbol, the frequency gaps between the frequency bins is reduced by the same ratio $T/T_i$. This is a known mechanism underlying to the OFDM theory that in the frequency domain (after the DFT), the increase of duration by a certain factor is equivalent to the resolution of the frequency bins at the output of the DFT being multiplied by the same factor.

In the example of the figure 7d, this ratio $T/T_i$ is equal to 4 : we can see 4 times more dashed vertical lines representing the frequency bins in the figure 7d than in the figure 7c above, and the gap $\Delta$f' between 2 successive frequency bins is 4 times smaller than the gap $\Delta$f between 2 successive frequency bins in figure 7c.

In the case of WLAN 802.11 a/g, this gap $\Delta$f is equal to 312.5 kHz.

If this ratio is high enough, this enables the localization of the peak $Y_1(m')$ since the probability to have it matching (or approximately matching) a frequency bins is linked to the gaps between the frequency bins. In other words and as mentioned earlier, the higher the ratio $T/T_i$ is, the more precise can be the estimation of the CFO $\varepsilon_F$. But increasing this ratio too much would lead to some impact in the spectral efficiency of the transmitted signal. So, a compromise should be found, which depends notably on the technology.

For instance with a ratio $T/T_i = \Delta$f/$\Delta$f'=4, we get a CFO estimation accuracy of 10%. This figure can be considered as sufficient in a context of WLAN CFO synchronization.

The estimated fractional carrier frequency offset $\hat{\varepsilon}_F$ can then be determined as the frequency shift between the matching frequency bins m and m', respectively at the emitter side (figures 7a, 7c) and at the receiver side (figure d).

It can be expressed as $\hat{\varepsilon}_F = \dfrac{\Delta f}{\Delta f'}.(m'-m)$

The computing circuitry DV of the estimation module EST can determine an estimated carrier frequency offset according to the frequency difference between the frequency m of the single subcarrier of the synchronization symbol and the frequency m' corresponding to the peak within the received symbols $Y_1(k)$.

Of course, not only the fractional carrier frequency offset can be estimated this way but also the whole carrier frequency offset.

In the presence of an integer carrier frequency offset $\varepsilon_I$, the frequency shift will be larger than the gap $\Delta f$ between successive initial frequency bins. Of course the carrier frequency offset is the sum of the integer and fractional parts: $\varepsilon = \varepsilon_I + \varepsilon_F$.

We can write the same with the estimations: $\hat{\varepsilon} = \hat{\varepsilon}_F + \hat{\varepsilon}_I$

According to an embodiment of the invention, the integer carrier frequency offset $\varepsilon_I$ can be determined in a different way. In this case, the previously described computing circuitry DV only determines the fractional carrier frequency offset $\varepsilon$

According to this embodiment, the synchronization signal comprises symbols for which, in the frequency domain, all the subcarriers are equal, i.e. all the inputs of the frequency-to-time conversion module IDFT are equal. In other words, during the transmission of the synchronization signal, $\forall k, X_I(k) = s_2$, where $s_2$. is the constant value. This value can be arbitrary chosen.

According to this embodiment, this second synchronization signal can be sent after or before the previously-described synchronization signal. Each type of synchronization signal has a different characteristic and has a different aim.

As it will be later demonstrated, at the output of the frequency-to-time conversion module IDFT the time symbol vector is then given by:

$$x_I(n) \approx [\delta(n).e^{j\phi}, 0, 0, 0\ldots].$$

And the signal outputted by the parallel-to-serial transformer $PS_E$ and transmitted over the transmission channel TC is then:

$$x_I(n) \approx \delta(n).e^{j\phi}$$

In the ideal case, the value of $\phi$ is zero. In this case, the convolution circuit CC at receiver side would be simpler to implement.

In practice, due to the modulation scheme that is used and due to the bit precision of the frequency-to-time conversion module IDFT, $\phi$ is different to zero. However, one of the advantages of the invention is not be robust enough to not be sensible to this approximation.

It aims in determining a good estimated value of the integer carrier frequency offset as perceived by the receiver RCV and in compensating for it.

FIG. 3 depicts a possible embodiment for a CFO estimator CFOE according to this embodiment.

It comprises a cyclic convolution module CC for performing a cycling convolution on the time symbols corresponding to the synchronization signal.

These time symbols $y_I(n)$ are provided to the cyclic convolution module CC by the serial-to-parallel transformer $SP_R$ during the reception of the synchronization signal.

This cyclic convolution module CC can perform convolution between the time symbols $y_I(n)$ and the circulant matrix of the complex conjugate of the transmitted OFDM symbol $x_I(n)$.

In linear algebra, a circulant matrix is a special kind of Toeplitz matrix (or diagonal-constant matrix) where each row vector is rotated one element to the right relative to the preceding row vector. In numerical analysis, circulant matrices are important because they are diagonalized by a discrete Fourier transform, and hence linear equations that contain them may be quickly solved using a fast Fourier transform.

Such a n x n circulant matrix C may take the following form:

$$C = \begin{bmatrix} c_0 & c_{n-1} & \cdots & c_2 & c_1 \\ c_1 & c_0 & c_{n-1} & & c_2 \\ \vdots & c_1 & \ddots & & \vdots \\ c_{n-2} & & & c_0 & c_{n-1} \\ c_{n-1} & c_{n-2} & \cdots & c_1 & c_0 \end{bmatrix}$$

The transmitted OFDM symbol $x_l(n)$ can be known by the receiver RCV as it knows that synchronization signal is being transmitted and because the emitter and the receiver share some data related to this process.

The receiver RCV then knows that $x_l(n) \approx \delta(n).e^{j\phi}$

The convolution can be $y_l(n) * x_l^*(n)$, wherein « * » represents the operator for the circular convolution. $x_l^*(n)$ is the complex conjugate of $x_l(n)$.

The rational for performing such a convolution can be explained as follows:

Let's write $\tilde{y}_l(n)$ the hypothetical $l^{th}$ received synchronization symbol in the case where the CFO $\varepsilon$ is null. This hypothesis is made for the purpose of the demonstration.

The "real" received synchronization symbol $y_l(n)$ can then be written as:

$$y_l(n) = \tilde{y}_l(n) \cdot e^{j2\pi\varepsilon n/N}$$

According to OFDM theory, adding the cyclic prefix in the emitter and removing them in receiver can be interpreted by the possibility to express the linear convolution by a circular convolution.

Then, from the « ideal » received synchronization symbol, we can write:

$$x_l(n) * h_l(n) = \tilde{y}_l(n)$$

This result is then transmitted to the DFT module, which outputs a vector:

$$DFT\{y_l(n) * x_l^*(n)\}$$

This expression can be rewritten according to the previous statements as:

$$DFT\{y_l(n) * x_l^*(n)\} = DFT\{[\tilde{y}_l(n) \cdot e^{j2\pi\varepsilon n/N}] * x_l^*(n)\}$$

$$= DFT\{[x_l(n) * h_l(n)] \cdot e^{j2\pi\varepsilon n/N} * x_l^*(n)\}$$

Since the synchronization signal has been chosen so that $x_l(n) \approx \delta(n).e^{j\phi}$, the result of the convolution $y_l(n) * x_l^*(n)$ is approximately $\delta(n)$.

The previous expression can then be written

$$DFT\{y_l(n) * x_l^*(n)\} = DFT\{h_l(n) \cdot e^{j2\pi\varepsilon n/N}\} = H_l(k - \varepsilon)$$

In other words, an estimation $\hat{\varepsilon}$ of the CFO can be determined by counting the number for zeros at the beginning or at the end of the expression $DFT\{y_l(n) * x_l^*(n)\}$

FIGS. 8a, 8b and 8c illustrate three different outputs of the time-to-frequency conversion module DFT during the transmission of synchronization signal, corresponding to three different situations. There are based on a WLAN 802 a/g standard and the signals, including the synchronization signal, make use of 52 subcarriers.

In the figure 8a, there is no CFO. The signal spectrum corresponds to these 52 subcarriers (48 data subcarriers and 4 pilot subcarriers). At the beginning and at the end of this spectrum, there are 12 unused subcarriers, which are set to zero according to OFDM principle.

In the figure 8b, a positive CFO has been introduced during the transmission of the synchronization signal over the transmission channel TC.

The spectrum is shifted to the left: the number of zero subcarriers at the beginning of the spectrum is reduced, while the number of zero subcarriers at the end of the spectrum is increased. The shift corresponds to the CFO $\varepsilon$.

In the figure 8c, a negative CFO has been introduced during the transmission of the synchronization signal over the transmission channel TC.

The spectrum is shifted to the right: the number of zero subcarriers at the beginning of the spectrum is increased, while the number of zero subcarriers at the end of the spectrum is reduced. The shift corresponds to the CFO $\varepsilon$.

A way to determine the estimation $\hat{\varepsilon}$ for the CFO can be to count the difference between the numbers of zero subcarrier at the beginning and at the end of the output of the DFT module. This different correspond to $2\hat{\varepsilon}$.

Accordingly, the output of the time-to-frequency conversion module DFT is provided to a counting circuitry CNT of the estimation module EST.

This counting circuitry CNT makes a measurement related to the frequency bins associated with the DFT module. More particularly, it counts the number of zero subcarriers at the beginning and the end of the provided signal $Y_1(k)$, and can then subtracts these 2 values.

In the embodiment depicted in the figure 3, this value is considered as the estimated integral carrier frequency offset $\hat{\varepsilon}_I$. This value is then provided to the frequency correction module FC.

As the zero subcarriers may not be exactly equal to zero due to noise and bit precision of the time-to-frequency and frequency-to-time modules, it could be helpful to introduce a threshold. Below this threshold, the value of the subcarrier would be considered as a zero subcarrier, whereas above this threshold, the subcarrier would be considered as transporting the symbol and will not be considered as a zero subcarrier.

More generally it can be stated that the estimated IFO is determined according to a measurement related to the numbers of frequency bins approximately equal to zero at the output of the time-to-frequency conversion.

The estimated integer carrier frequency offset $\hat{\varepsilon}_I$ can be provided by the computing circuitry DV as previously described. The estimated fractional carrier frequency offset is also provided to the frequency correction module FC.

In the embodiment depicted in figure 2, the estimated carrier frequency offset (corresponding to the integer and fractional parts so that $\hat{\varepsilon} = \hat{\varepsilon}_I + \hat{\varepsilon}_F$) is provided to the frequency correction module FC.

The frequency correction module FC takes the estimated IFO $\hat{\varepsilon}_I$, FFO $\hat{\varepsilon}_F$ or CFO $\hat{\varepsilon}$ as input so as to determine the frequency correction signal c.

In the case it receives separate signals $\hat{\varepsilon}_I$ and $\hat{\varepsilon}_F$, it can simply reconstruct an estimation of the CFO by computing $\hat{\varepsilon} = \hat{\varepsilon}_I + \hat{\varepsilon}_F$.

According to an embodiment of the frequency correction module FC, it can generate a sinusoidal wave at a frequency $F_{FC}=|\hat{\varepsilon}|$ *312.5 kHz as $|\hat{\varepsilon}|$ is a normalized value with respect to the inter subcarrier frequency $\Delta f$ ($\Delta F$=312.5kHz in all 802.11 OFDM WLAN standards).

- If the CFO is positive, $F_{FC}$ down-converts the received signal by mixing down the received signal in the time domain (i.e. before the IFFT block in the receiver).
- If the CFO is negative, $F_{FC}$ up-converts the received signal by mixing up the received signal in the time domain (i.e. before the IFFT block in the receiver).

Mixing-up and mixing-down can have different implementations in RF or baseband.

In this embodiment, a complex mixing is performed. Using a complex multiplier before the input of the S/P converter of the receiver is a well-known technique.

Functionally, the frequency correction module FC is thus performing a classical task and may be implemented in various ways accessible to the man skilled-in-the-art. For this reason, it will not be further detailed, as the invention is independent of the actual implementation of this functional module.

As explained earlier, the frequency correction signal c is provided as input of the receiving function module RFM.

**Claims**

**1.** A method for receiving and demodulating an orthogonal frequency division multiplexing signal received from an emitter (EMT) by a receiver (RCV), comprising demultiplexing said orthogonal frequency division multiplexing signal to generate time symbols ($y_l(n)$) and performing a time-to-frequency conversion of said time symbols to generate received symbols ($Y_1(k)$), said orthogonal frequency division multiplexing signal comprising synchronization signal constituted by at least a synchronization symbol corresponding to a single subcarrier, and data signal constituted of data symbols; said method further comprising:

- receiving from said emitter said synchronization symbol during a period T, which is substantially longer that the transmission period of said data symbols so that a resolution of frequency bins at an output of the time-to frequency conversion is multiplied by the factor T/Ti;
- determining an estimated carrier frequency offset ($\hat{\varepsilon}$) according to the frequency difference between the frequency (m) of said single subcarrier and the frequency (m') corresponding to a peak within said received symbols ($Y_1(k)$);
- applying said estimated carrier frequency offset ($\hat{\varepsilon}$) to said time symbols, so as to correct the carrier frequency of said received symbols.

2. The method according to claim 1, wherein said estimated carrier frequency offset ($\hat{\varepsilon}$) is applied only on time symbols corresponding to said data signal.

3. The method according to any of previous claims, wherein a frequency correction signal (c) is determined from said estimated carrier frequency offset ($\hat{\varepsilon}$) and applied to said time symbols ($y_1(n)$).

4. The method according to claim 3, wherein said frequency correction signal (c) is a sine wave signal at a frequency determined by said estimated carrier frequency offset ($\hat{\varepsilon}$).

5. The method according to claim 4, wherein said frequency correction signal (c) is mixed to said time symbols ($y_1(n)$).

6. A method according to any of previous claims, wherein said estimated carrier frequency ($\hat{\varepsilon}$) is an estimated fractional carrier frequency offset ($\hat{\varepsilon}_F$).

7. A method according to claim 2, further comprising steps of:

- performing a cyclic convolution on said time symbols corresponding to a second synchronization signal;
- determining an estimated integer carrier frequency offset ($\hat{\varepsilon}_I$) according to a measurement related to the numbers of frequency bins approximately equal to zero at the output of said time-to-frequency conversion;
- applying said estimated integer carrier frequency offset ($\hat{\varepsilon}_I$) to said time symbols, so as to correct the carrier frequency of said received symbols.

8. The method according to claim 7, wherein said measurement is a difference of the number of frequency bins approximately equal to zero at the beginning and at the end of said output.

9. The method according to any of the previous claims, wherein said orthogonal frequency division multiplexing signal is divided into packets and said synchronization signal is repeated at the beginning of said packets.

10. A computer program product comprising a computer readable medium, having thereon a computer program comprising program instructions, the computer program being loadable into a data-processing unit and adapted to cause execution of the method according to any of claims 1 to 8 when the computer program is run by the data-processing unit.

11. A receiver for receiving and demodulating an orthogonal frequency division multiplexing signal received from an emitter (EMT), comprising a receiving function module (RFM) adapted for demultiplexing said orthogonal frequency division multiplexing signal to generate time symbols ($y_l(n)$) and performing a time-to-frequency conversion of said time symbols to generate received symbols ($Y_1(k)$), said orthogonal frequency division multiplexing signal comprising synchronization signal constituted by at least a synchronization symbol corresponding to a single subcarrier, and data signal constituted of data symbols; said receiving function module (RFM) being further adapted to receive said synchronization symbol during a period T, which is substantially longer that the transmission period of said data symbols so that a resolution of frequency bins at an output of the time-to frequency conversion is multiplied by the factor T/Ti; and said receiver (RCV) further comprising a carrier frequency offset estimator (CFOE) having:

- A computing circuitry (DV) for determining an estimated carrier frequency offset $(\hat{\varepsilon})$ according to the frequency difference between the frequency (m) of said single subcarrier and the frequency (m') corresponding to a peak within said received symbols $(Y_1(k))$;
- A frequency correction module (FC) for applying said estimated carrier frequency offset $(\hat{\varepsilon})$ to said time symbols, so as to correct the carrier frequency of said received symbols.

12. The receiver according to claim 11, wherein said frequency correction module (FC) determines a frequency correction signal (c) from said estimated carrier frequency offset $(\hat{\varepsilon})$ and provides it to said receiving function module (RFM), said receiving function module (RFM) being adapted to apply it to said time symbols $(y_l(n))$.

13. The receiver according to claim 12, wherein said frequency correction module (FC) generates as said frequency correction signal (c) a sine wave signal at a frequency determined by said estimated carrier frequency offset $(\hat{\varepsilon})$.

14. The receiver according to claim 11 to 13, further comprising:

- a cyclic convolution module (CC) for performing a cyclic convolution on time symbols corresponding to a second synchronization signal,
- a counting module (CNT) for determining an estimated integer carrier frequency offset $(\hat{\varepsilon})$ according to a measurement related to the numbers of frequency bins approximately equal to zero at the output of said time-to-frequency conversion, and,
- a frequency correction module (FC) for applying said estimated integer carrier frequency offset $(\hat{\varepsilon})$ to said time symbols, so as to correct the carrier frequency of said received symbols.

15. The receiver according to claim 10, wherein said counting module (CNT) is adapted to compute said measurement as a difference of the number of frequency bins approximately equal to zero at the beginning and at the end of said output.

**Patentansprüche**

1. Verfahren zum Empfangen und Demodulieren eines orthogonalen Frequenzteilungsmultiplexsignals, das von einem Sender (EMT) mittels eines Empfängers (RCV) empfangen wurde, ein Demultiplexen des orthogonalen Frequenzteilungsmultiplexsignals zum Erzeugen von Zeitsymbolen $(y_l(n))$ und ein Ausführen einer Zeit-Frequenz-Transformation der Zeitsymbole zum Erzeugen empfangener Symbole $(Y_l(k))$ umfassend, wobei das orthogonale Frequenzteilungsmultiplexsignal ein Synchronisationssignal, das durch mindestens ein Synchronisationssymbol gebildet wird, das zu einem einzelnen Unterträger gehört, und ein Datensignal umfasst, das aus Datensignalen gebildet wird, wobei das Verfahren ferner umfasst:

- Empfangen des Synchronisationssymbols vom Sender während eines Zeitabschnitts T, der wesentlich länger als der Übertragungszeitabschnitt der Datensymbole ist, sodass eine Auflösung der Frequenzlinien bei einer Ausgabe der Zeit-Frequenz-Transformation mit dem Faktor $T/T_i$ multipliziert wird;
- Bestimmen eines abgeschätzten Trägerfrequenzoffsets $(\hat{\varepsilon})$ entsprechend der Frequenzdifferenz zwischen der Frequenz (m) des einzelnen Unterträgers und der Frequenz (m'), die zu einem Spitzenwert innerhalb der empfangenen Symbole $(Y_l(k))$ gehört;
- Anwenden des abgeschätzten Trägerfrequenzoffsets $(\hat{\varepsilon})$ auf die Zeitsymbole, um so die Trägerfrequenz der empfangenen Symbole zu korrigieren.

2. Verfahren nach Anspruch 1, wobei der abgeschätzte Trägerfrequenzoffset $(\hat{\varepsilon})$ nur auf Zeitsymbole angewendet wird, die zu dem Datensymbol gehören.

3. Verfahren nach einem der vorhergehenden Ansprüche, wobei ein Frequenzkorrektursignal (c) aus dem abgeschätzten Trägerfrequenzoffset $(\hat{\varepsilon})$ bestimmt und auf die Zeitsymbole $(y_l(n))$ angewendet wird.

4. Verfahren nach Anspruch 3, wobei das Frequenzkorrektursignal (c) ein Sinuswellensignal bei einer Frequenz ist, die durch den abgeschätzten Trägerfrequenzoffset $(\hat{\varepsilon})$ bestimmt wird.

5. Verfahren nach Anspruch 4, wobei das Frequenzkorrektursignal (c) zu den Zeitsymbolen $(y_l(n))$ gemischt wird.

**6.** Verfahren nach einem der vorhergehenden Ansprüche, wobei die abgeschätzte Trägerfrequenz ($\hat{\varepsilon}$) ein abgeschätzter teilweiser Trägerfrequenzoffset ($\hat{\varepsilon}_F$) ist.

**7.** Verfahren nach Anspruch 2, ferner die Schritte umfassend zum:

- Ausführen einer zyklischen Faltung an den Zeitsymbolen, die zu einem zweiten Synchronisationssignal gehören;
- Bestimmen eines abgeschätzten ganzzahligen Trägerfrequenzoffsets ($\hat{\varepsilon}_I$) entsprechend einer Messung bezüglich der Anzahlen von Frequenzlinien, die bei der Ausgabe der Zeit-Frequenz-Transformation näherungsweise gleich null sind;
- Anwenden des abgeschätzten ganzzahligen Trägerfrequenzoffsets ($\hat{\varepsilon}_I$) auf die Zeitsymbole, um so die Trägerfrequenz der empfangenen Symbole zu korrigieren.

**8.** Verfahren nach Anspruch 7, wobei die Messung eine Differenz der Anzahl der Frequenzlinien ist, die am Anfang und am Ende der Ausgabe näherungsweise gleich null sind.

**9.** Verfahren nach einem der vorhergehenden Ansprüche, wobei das orthogonale Frequenzteilungsmultiplexsignal in Pakete unterteil wird und das Synchronisationssignal am Anfang der Pakete wiederholt wird.

**10.** Computerprogrammprodukt, das ein computerlesbares Medium umfasst, das darauf ein Computerprogramm mit Programmanweisungen aufweist, wobei das Computerprogramm in eine Datenverarbeitungseinheit geladen werden kann und geeignet ist, eine Ausführung des Verfahrens nach einem der Ansprüche 1 bis 8 zu bewirken, wenn das Computerprogramm durch die Datenverarbeitungseinheit abgearbeitet wird.

**11.** Empfänger zum Empfangen und Demodulieren eines orthogonalen Frequenzteilungsmultiplexsignals, das von einem Sender (EMT) empfangen wurde, der ein empfangendes Funktionsmodul (RFM) aufweist, das geeignet ist zum Demultiplexen des orthogonalen Frequenzteilungsmultiplexsignals, um Zeitsymbole ($y_l(n)$) zu erzeugen, und zum Ausführen einer Zeit-Frequenz-Transformation der Zeitsymbole, um empfangene Symbole ($Y_l(k)$) zu erzeugen, wobei das orthogonale Frequenzteilungsmultiplexsignal ein Synchronisationssignal, das durch mindestens ein Synchronisationssymbol gebildet wird, das zu einem einzelnen Unterträger gehört, und ein Datensignal umfasst, das aus Datensymbolen gebildet wird, wobei das empfangende Funktionsmodul (RFM) ferner geeignet ist, ein Synchronisationssymbol während eines Zeitabschnitts T zu empfangen, der wesentlich länger als der Übertragungszeitabschnitt der Datensymbole ist, sodass eine Auflösung der Frequenzlinien bei einer Ausgabe der Zeit-Frequenz-Transformation mit dem Faktor $T/T_i$ multipliziert wird, und wobei der Empfänger (RCV) ferner einen Trägerfrequenzoffset-Schätzer (CFOE) aufweist mit:

- einer Berechnungsschaltung (DV) zum Bestimmen eines abgeschätzten Trägerfrequenzoffsets ($\hat{\varepsilon}$) entsprechend der Frequenzdifferenz zwischen der Frequenz (m) des einzelnen Unterträgers und der Frequenz (m'), die zu einem Spitzenwert innerhalb der empfangenen Symbole ($Y_l(k)$) gehört;
- einem Frequenzkorrekturmodul (FC) zum Anwenden des abgeschätzten Trägerfrequenzoffsets ($\hat{\varepsilon}$) auf die Zeitsymbole, um so die Trägerfrequenz der empfangenen Symbole zu korrigieren.

**12.** Empfänger nach Anspruch 11, wobei das Frequenzkorrekturmodul (FC) ein Frequenzkorrektursignal (c) aus dem abgeschätzten Trägerfrequenzoffset ($\hat{\varepsilon}$) bestimmt und es dem empfangenden Funktionsmodul (RFM) bereitstellt, wobei das empfangende Funktionsmodul (RFM) geeignet ist, es auf die Zeitsymbole ($y_l(n)$) anzuwenden.

**13.** Empfänger nach Anspruch 12, wobei das Frequenzkorrekturmodul (FC) als das Frequenzkorrektursignal (c) ein Sinuswellensignal bei einer Frequenz erzeugt, die durch den abgeschätzten Trägerfrequenzoffset ($\hat{\varepsilon}$) bestimmt wird.

**14.** Empfänger nach Anspruch 11 bis 13, ferner mit:

- einem zyklischen Faltungsmodul (CC) zum Ausführen einer zyklischen Faltung an Zeitsymbolen, die zu einem zweiten Synchronisationssignal gehören;
- einem Berechnungsmodul (CNT) zum Bestimmen eines abgeschätzten ganzzahligen Trägerfrequenzoffsets ($\hat{\varepsilon}$) entsprechend einer Messung bezüglich der Anzahlen von Frequenzlinien, die bei der Ausgabe der Zeit-Frequenz-Transformation näherungsweise gleich null sind, und
- einem Frequenzkorrekturmodul (FC) zum Anwenden des abgeschätzten ganzzahligen Trägerfrequenzoffsets ($\hat{\varepsilon}$) auf die Zeitsymbole, um so die Trägerfrequenz der empfangenen Symbole zu korrigieren.

**EP 2 744 162 B1**

**15.** Empfänger nach Anspruch 10, wobei das Berechnungsmodul (CNT) geeignet ist, die Messung als eine Differenz der Anzahl der Frequenzlinien, die am Anfang und am Ende der Ausgabe näherungsweise gleich null sind, zu berechnen.

**Revendications**

**1.** Procédé pour recevoir et démoduler un signal à multiplexage par répartition orthogonale en fréquence reçu d'un émetteur (EMT) par un récepteur (RCV), comprenant le démultiplexage dudit signal à multiplexage par répartition orthogonale en fréquence pour générer des symboles de temps ($y_l(n)$) et en effectuant une conversion de temps en fréquence desdits symboles de temps pour générer des symboles reçus ($Y_l(k)$), ledit signal à multiplexage par répartition orthogonale en fréquence comprenant un signal de synchronisation constitué d'au moins un symbole de synchronisation correspondant à une sous-porteuse unique, et un signal de données constitué de symboles de données; ledit procédé comprenant en outre les étapes consistant à :

- recevoir depuis ledit émetteur ledit symbole de synchronisation pendant une période T qui est sensiblement plus longue que la période de transmission desdits symboles de données, de sorte qu'une résolution du nombre de points d'acquisition de fréquence à une sortie de la conversion de temps en fréquence soit multipliée par un facteur T/Ti ;
- déterminer un décalage estimé de la fréquence porteuse ($\hat{\varepsilon}$) en fonction de la différence en fréquence entre la fréquence (m) de ladite sous-porteuse unique et la fréquence (m') correspondant à un pic à l'intérieur desdits symboles reçus ($Y_l(k)$);
- appliquer ledit décalage estimé de la fréquence porteuse ($\hat{\varepsilon}$) audits symboles de temps, de manière à corriger la fréquence porteuse desdits symboles reçus.

**2.** Procédé selon la revendication 1, dans lequel ledit décalage estimé de fréquence porteuse ($\hat{\varepsilon}$) n'est appliqué que à des symboles de temps qui correspond audit signal de données.

**3.** Le procédé selon l'une quelconque des revendications précédentes, dans lequel un signal de correction de fréquence (c) est déterminé à partir dudit décalage estimé de fréquence porteuse ($\hat{\varepsilon}$) et est appliqué audits symboles de temps ($y_l(n)$).

**4.** Procédé selon la revendication 3, dans lequel ledit signal de correction de fréquence (c) est un signal d'onde sinusoïdale à une fréquence déterminée par ledit décalage estimé de fréquence porteuse ($\hat{\varepsilon}$).

**5.** Procédé selon la revendication 4, dans lequel ledit signal de correction de fréquence (c) est mélangé audits symboles de temps ($y_l(n)$).

**6.** Procédé selon l'une quelconque des revendications précédentes, dans lequel ledit décalage estimé de fréquence porteuse ($\hat{\varepsilon}$) est un décalage estimé fractionnel de fréquence porteuse ($\hat{\varepsilon}_F$).

**7.** Procédé selon la revendication 2, comprenant en outre les étapes consistant à:

- exécuter une convolution cyclique sur lesdits symboles de temps correspondant à un deuxième signal de synchronisation;
- déterminer un décalage estimé de fréquence porteuse sous forme d'un entier ($\hat{\varepsilon}_I$) en fonction d'une mesure concernant le nombre de points d'acquisition de fréquence à peu près égaux à zéro à la sortie de ladite conversion de temps en fréquence;
- appliquer ledit décalage estimé de fréquence porteuse sous forme d'un entier ($\hat{\varepsilon}_I$) audits symboles de temps, de manière à corriger la fréquence porteuse desdits symboles reçus.

**8.** Procédé selon la revendication 7, dans lequel ladite mesure est une différence du nombre de points d'acquisition de fréquence à peu près égaux à zéro au début et à la fin de ladite sortie.

**9.** Procédé selon l'une quelconque des revendications précédentes, dans lequel ledit signal à multiplexage par répartition orthogonale en fréquence est divisé en paquets et ledit signal de synchronisation est répété au début desdits paquets.

**10.** Produit de programme informatique comprenant un support lisible par ordinateur, portant un programme d'ordinateur comprenant des instructions de programme, le programme informatique pouvant être chargé dans une unité de traitement de données et adapté pour provoquer l'exécution du procédé selon l'une quelconque des revendications 1 à 8 lorsque le programme d'ordinateur est exécuté par l'unité de traitement de données.

**11.** Récepteur pour recevoir et démoduler un signal à multiplexage par répartition orthogonale en fréquence reçu d'un émetteur (EMT), comprenant un module de fonction de réception (RFM) adapté pour démultiplexer ledit signal à multiplexage par répartition orthogonale en fréquence afin de générer des symboles de temps ($y_l$ (n)) et effectuer une conversion de temps en fréquence desdits symboles de temps pour générer des symboles reçus ($Y_l(k)$), ledit signal à multiplexage par répartition orthogonale en fréquence comprenant un signal de synchronisation constitué d'au moins un symbole de synchronisation correspondant à une sous-porteuse unique, et un signal de données constitué de symboles de données ; ledit module de fonction de réception (RFM) étant en outre adapté pour recevoir ledit symbole de synchronisation pendant une période T qui est sensiblement plus longue que la période de transmission desdits symboles de données, de sorte qu'une résolution du nombre de points d'acquisition de fréquence à une sortie de la conversion de temps en fréquence soit multipliée par un facteur T/Ti ; et ledit récepteur (RCV) comprenant en outre un estimateur de décalage de fréquence porteuse (CFOE) comportant :

- un circuit de calcul (DV) pour déterminer un décalage estimé de fréquence porteuse ($\hat{\varepsilon}$) en fonction de la différence de fréquence entre la fréquence (m) de ladite sous-porteuse unique, et la fréquence (m') correspondant à un pic à l'intérieur desdits symboles reçus ($Y_l(k)$);
- un module de correction de fréquence (CF) pour appliquer ledit décalage estimé de fréquence porteuse ($\hat{\varepsilon}$) audits symboles de temps, de manière à corriger la fréquence porteuse desdits symboles reçus.

**12.** Récepteur selon la revendication 11, dans lequel ledit module de correction de fréquence (FC) détermine un signal de correction de fréquence (c) à partir dudit décalage estimé de fréquence porteuse ($\hat{\varepsilon}$) et le fournit audit module de fonction de réception (RFM), ledit module de fonction de réception (RFM) étant adapté pour l'appliquer auxdits symboles de temps ($y_l(n)$).

**13.** Récepteur selon la revendication 12, dans lequel ledit module de correction de fréquence (FC) génère en tant que ledit signal de correction de fréquence (c) un signal d'onde sinusoïdale à une fréquence déterminée par ledit décalage estimé de fréquence porteuse ($\hat{\varepsilon}$).

**14.** Récepteur selon la revendication 11 à 13, comprenant en outre:

- un module de convolution cyclique (CC) pour effectuer une convolution cyclique sur des symboles de temps correspondant à un deuxième signal de synchronisation,
- un module de comptage (CNT) pour déterminer un décalage estimé de fréquence porteuse sous forme d'un entier ($\hat{\varepsilon}$) en fonction d'une mesure concernant le nombre de points d'acquisition de fréquence à peu près égaux à zéro à la sortie de ladite conversion de temps en fréquence, et,
- un module de correction de fréquence (CF) pour appliquer ledit décalage estimé de fréquence porteuse sous forme d'un entier ($\hat{\varepsilon}$) auxdits symboles de temps, de manière à corriger la fréquence porteuse desdits symboles reçus.

**15.** Récepteur selon la revendication 10, dans lequel ledit module de comptage (CNT) est adapté pour calculer ladite mesure sous forme d'une différence du nombre de points d'acquisition de fréquence à peu près égaux à zéro au début et à la fin de ladite sortie.

**Fig. 1**

**Fig. 2**

Fig. 3

Fig. 4a

Fig. 4b

Fig. 5

Fig. 7a

Fig. 7b

Fig. 7c

Fig. 7d

**Fig. 8a**

$\varepsilon = 0$

$Y_I(k)$

52 used subcarriers:
48 data subcarriers + 4 pilot subcarriers

$H_I(k)$

Frequency index k

12 unused subcarriers
Zero subcarriers

**Fig. 8b**

$\varepsilon > 0$

$Y_I(k)$

$H_I(k - \varepsilon)$

Frequency index k

$\varepsilon$

Zero subcarriers
at the beginning

Zero subcarriers
at the end

$\varepsilon$

**Fig. 8c**

$\varepsilon < 0$

$Y_I(k)$

$H_I(k - \varepsilon)$

$\varepsilon$

Frequency index k

$\varepsilon$

Zero subcarriers
at the beginning

Zero subcarriers
at the end

$S_1$  $D_1$   $S_2$  $D_2$   $S_3$  $D_3$   $\cdots$   $S_P$  $D_P$

$P_1$   $P_2$   $P_3$   $P_P$

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004120410 A


**Non-patent literature cited in the description**

- **FERDINAND CLASSEN ; HEINRICH MEYR.** Frequency Synchronization Algorithms for OFDM systems suitable for Communication over Frequency Selective Fading Channels. *Proceedings of the Vehicular Technology Conference (VTC'97),* 1997